(19)

Europäisches
Patentamt
European
Patent Office
Office européen
des brevets

(11) **EP 2 498 462 A1**

(12) **EUROPEAN PATENT APPLICATION**
published in accordance with Art. 153(4) EPC

(43) Date of publication:
**12.09.2012 Bulletin 2012/37**

(21) Application number: **09851028.2**

(22) Date of filing: **04.11.2009**

(51) Int Cl.:
**H04L 25/03** (2006.01)          **H04B 7/04** (2006.01)
**H04W 24/00** (2009.01)

(86) International application number:
**PCT/CN2009/074787**

(87) International publication number:
**WO 2011/054144 (12.05.2011 Gazette 2011/19)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Alcatel Lucent**
**75007 Paris (FR)**

(72) Inventors:
• **LUO, Qinglin**
  **Shanghai 201206 (CN)**

• **SHI, Jing**
  **Shanghai 201206 (CN)**

(74) Representative: **Behrens, Ralf Erik**
**Dreiss Patentanwälte**
**Postfach 10 37 62**
**70032 Stuttgart (DE)**

(54) **METHOD AND APPARATUS FOR ANTENNA CALIBRATION IN TDD WIRELESS COMMUNICATION SYSTEM BASED ON COORDINATED MULTI-POINT (COMP)**

(57)     The present invention discloses a method and device for self-calibrating an antenna in a base station of a CoMP-based TDD system, where firstly the relative reciprocity $\tilde{w}_i$ of each pair of base station transmitter and receiver of the present base station relative to a calibration transmitter and receiver is calculated, and the relative reciprocity $\overline{w}_i$ of each pair of base station transmitter and receiver of the present base station relative to a reference base station transmitter and receiver is calcuated by selecting one pair of base station transmitter and receiver as the reference base station transmitter and receiver, wherein i=1, 2, ..., N; then a measurement signal is transmitted from the calibration transmitter of the present base station to the calibration receiver, and a channel response $h_{c,k}$ of the calibration transmitter and receiver of the present base station is measured, wherein $h_{c,k} = h_{ct,k}h_{cr,k}$ , and k=1, 2, ..., M; then a channel response $h_{cr,k}$ of the calibration receiver of the present base station is measured; next the absolute reciprocity $w_{c,k}$ of the calibration transmitter and receiver of the present base station is calculated in the formula of

$$w_{c,k} = \frac{h_{c,k}}{\left(h_{cr,k}\right)^2} \; ;$$

and finally a global relative calibration weight $\hat{w}_i$ of each pair of base station transmitter and receiver of the present base station from an acquired global reference $W_m$ is calculated in the formula of

$$\hat{w}_i = \overline{w}_i \frac{w_t}{w_m}$$

The technical solution of the invention can perform antenna calibration of a CoMP-based TDD radio communication system.

Calculate the relative reciprocities of the two pairs of base station transmitters and receivers relative to the calibration transmitter and receiver, and calculate the relative reciprocities of the two pairs of base station transmitters and receivers relative to a reference base station transmitter and receiver by selecting one pair of base station transmitter and receiver as the reference base station transmitter and receiver — S41

Transmit a measurement signal from the calibration transmitter of the base station 11 to the calibration receiver, and measure a channel response of the calibration transmitter and receiver — S42

Measure a channel response of the calibration receiver — S43

Calculate the absolute reciprocity of the calibration transmitter and receiver — S44

Calculate a global relative calibration weight of each pair of base station transmitter and receiver of the present base station from an acquired global reference — S45

FIG. 4

## Description

## Field of the Invention

The present invention relates to a radio communication system and in particular to a Time Division Duplex (TDD) radio communication system based upon Cooperative Multipoint Processing (CoMP).

## Background of the Invention

In a TDD radio communication system, different timeslots over the same frequency channel (i.e., a carrier) are used for uplink and downlink communication between a base station and a mobile station to temporally separate reception and transmission channels in a way that the base station transmits a signal to the mobile station in a specific period of time and the mobile station transmits a signal to the base station in another period of time. The base station and the mobile station have to cooperate in consistence to thereby operate smoothly.

In the TDD system, uplink and downlink transmission takes place in the same frequency band, that is, there is reciprocity between uplink and downlink channels, so the downlink channel can be estimated with a parameter of the uplink channel. Unfortunately the uplink and downlink channels may not be reciprocal in practice due to a difference in radio frequency circuits for reception and transmission in the base station and the mobile station of the TDD system and some other factors, e.g., a speed-incurred Doppler shift, etc., so it is desirable to calibrate a transmission antenna and a reception antenna of the base station to thereby compensate for the difference.

At present, relative calibration has been widely applied in the majority of TDD systems. The following two relative calibration modes are generally available among existing solutions.

A first solution involves traditional relative calibration of an antenna in a single cell.

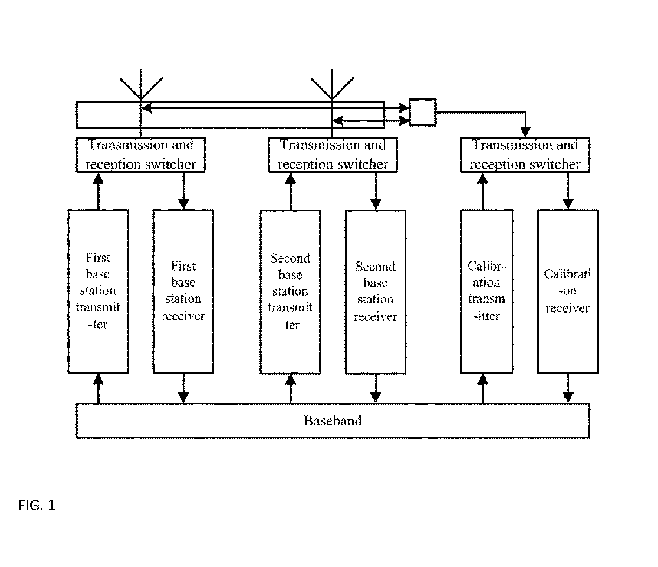

As illustrated in Fig.1, it is assumed there is a base station with two antennas, each of which is controlled by a transmission and reception switcher to transmit and receive a signal in time division. The base station includes two base station transmitters (i.e. a first base station transmitter and a second base station transmitter) and two base station receivers (i.e. a first base station receiver and a second base station receiver) as well as a calibration transmitter and a calibration receiver.

Firstly, two orthogonal calibration signals are transmitted from the two base station transmitters to the calibration receiver simultaneously to measure a channel response of a transmitter calibration loop,

$$ h_{t,i} = h_{bt,i} h_{cr} , $$

Where $h_{t,i}$ represents the measured channel response of the transmitter calibration loop; $h_{bt,1}$ represents a channel response of the $i^{th}$ base station transmitter, and i=1, 2; and $h_{cr}$ represents a channel response of the calibration receiver.

Calibration signals are transmitted respectively from the calibration transmitter to the two base station receivers to measure a channel response of a receiver calibration loop,

$$ h_{r,i} = h_{ct} h_{br,i} , $$

Where $h_{r,i}$ represents the measured channel response of the receiver calibration loop, $h_{br,i}$ represents a channel response of the $i^{th}$ base station receiver, and $h_{ct}$ represents a channel response of the calibration transmitter.

Then the reciprocity of the $i^{th}$ base station transmitter and the $i^{th}$ base station receiver is calculated,

$$ \widetilde{w}_i = \frac{h_{t,i}}{h_{r,i}} = \frac{h_{bt,i}}{h_{br,i}} \frac{h_{cr}}{h_{ct}} = \frac{w_i}{w_c} $$

$$ w_i = \frac{h_{bt,i}}{h_{br,i}} \qquad w_c = \frac{h_{ct}}{h_{cr}} . $$

Where and

Finally they are normalized and the relative reciprocity is acquired:

$$ \overline{w}_i = \frac{\widetilde{w}_i}{\widetilde{w}_1} = \frac{h_{t,i}}{h_{r,i}} \frac{h_{r,1}}{h_{t,1}} $$

Since all of $h_{t,i}$, $h_{r,i}$, $h_{r,1}$ and $h_{t,1}$ are measured values, $\overline{w}_i$ represents a calculable value.

Here $w_1$ is taken as a reciprocity reference of the base station and $\overline{w}_i$ as a relative calibration weight.

A second solution involves traditional over-the-air calibration in a single cell.

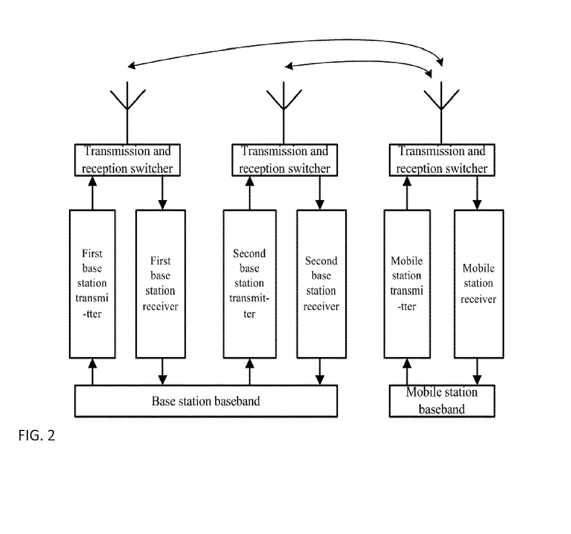

As illustrated in Fig.2, it is assumed there is a base station with two antennas, each of which is controlled by a transmission and reception switcher to transmit and receive a signal in time division. The base station includes two base station transmitters (i.e. a first base station transmitter and a second base station transmitter) and two base station receivers (i.e. a first base station receiver and a second base station receiver). There is a mobile station with an antenna controlled by a transceiver to transmit and receive a signal in time division. The mobile terminal includes a mobile station transmitter and a mobile terminal receiver.

Firstly, two orthogonal calibration signals are transmitted from the two base station transmitters to the mobile station receiver simultaneously to measure a channel response of a transmitter calibration loop,

$$h_{t,i} = h_{bt,i} h_{AI,i} h_{mr} \ ,$$

Where $h_{t,i}$ represents the measured channel response of the transmitter calibration loop; $h_{bt,i}$ represents a channel response of the $i^{th}$ base station transmitter, and i=1, 2; $h_{AI,i}$ represents a channel response of an air interface; and $h_{mr}$ represents a channel response of the mobile station receiver.

It shall be noted that a base band of the mobile station is not co-located with that of the base station, so the mobile station has to transmit $h_{t,i}$ to the base station over the air interface after measuring $h_{t,i}$.

Calibration signals are transmitted respectively from the mobile station transmitter to the two base station receivers to measure a channel response of a receiver calibration loop,

$$h_{r,i} = h_{mt} h_{Ai,i} h_{br,i} \ ,$$

Where $h_{r,i}$ represents the measured channel response of the receiver calibration loop, $h_{AI,i}$ represents a channel response of the air interface, $h_{br,i}$ represents a channel response of the $i^{th}$ base station receiver, and $h_{mt}$ represents a channel response of the mobile station transmitter.

Then the reciprocity of the $i^{th}$ base station transmitter and the $i^{th}$ base station receiver is calculated,

$$\widetilde{w}_i = \frac{h_{t,i}}{h_{r,i}} = \frac{h_{bt,i}}{h_{br,i}} \frac{h_{mr}}{h_{mt}} = \frac{w_i}{w_m}$$

$$w_i = \frac{h_{bt,i}}{h_{br,i}} \qquad w_m = \frac{h_{mt}}{h_{mr}} .$$

Where and

Finally they are normalized and the relative reciprocity is acquired:

$$\overline{w}_i = \frac{\widetilde{w}_i}{\widetilde{w}_1} = \frac{h_{t,i}}{h_{r,i}} \frac{h_{r,1}}{h_{t,1}}$$

Since all of $h_{t,i}$, $h_{r,i}$, and $h_{t,1}$ are measured values, $\overline{w}_i$ represents a calculable value.

Here $w_1$ is taken as a reciprocity reference of the base station and $\overline{w}_i$ as a relative calibration weight.

The foregoing two relative calibrating solutions for a TDD system are applicable only to an application scenario with a single cell. However a working antenna calibrating solution has been absent so far to a CoMP-based TDD radio communication system, so it is very necessary to provide an antenna calibrating solution to a CoMP-based TDD radio communication system.

**Summary of the Invention**

In view of the foregoing problem in the prior art, there are provided a method of calibrating an antenna in a CoMP-based TDD communication system and a device corresponding thereto.

According to a first aspect of the invention, there is provided a method of self-calibrating an antenna in a base station of a CoMP-based TDD communication system, wherein the method includes the steps of:

a. calculating the relative reciprocity $\widetilde{w}_i$ of each pair of base station transmitter and receiver of the present base station relative to a calibration transmitter and receiver, and calculating the relative reciprocity $\overline{w}_i$ of each pair of base station transmitter and receiver of the present base station relative to a reference base station transmitter and receiver by selecting one pair of base station transmitter and receiver as the reference base station transmitter and receiver, wherein i represents the $i^{th}$ pair of base station transmitter and receiver among a plurality of pairs of base station transmitters and receivers of the present base station, and i=1, 2, ..., N;

b. transmitting a measurement signal from the calibration transmitter of the present base station to the calibration receiver, and measuring a channel response $h_{c,k}$ of the calibration transmitter and receiver of the present base station, wherein $h_{c,k} = h_{ct,k} h_{cr,k}$, k indicates that the present base station is the $k^{th}$ base station in the CoMP-based TDD communication system, and k=1, 2, ..., M; and M represents the total number of cooperative base stations in the CoMP-based TDD communication system;

c. measuring a channel response $h_{cr,k}$ of the calibration receiver of the present base station;

d. calculating the absolute reciprocity $w_{c,k}$ of the calibration transmitter and receiver of the present base station in the formula of

$$w_{c,k} = \frac{h_{c,k}}{(h_{cr,k})^2} \ ;$$

and

e. calculating a global relative calibration weight $\hat{w}_i$ of each pair of base station transmitter and receiver of the present base station from an acquired global reference $w_m$ in the formula of

$$\hat{w}_i = \overline{w}_i \, \frac{w_t}{w_m} \ ,$$

wherein $w_t$ represents the absolute reciprocity of the reference base station transmitter and receiver of the present base station, $w_t = \tilde{w}_t w_{c,k}$, and $w_m$ represents the absolute reciprocity of the reference base station transmitter and receiver of the present base station or the absolute reciprocity of a reference base station transmitter and receiver of one of the other cooperative base stations.

Optionally after the step e, the method further includes the step of:

f. calculating the absolute calibration weight $w_i$ of each pair of base station transmitter and receiver of the present base station from the calculated global relative calibration weight $\hat{w}_i$ of each pair of base station transmitter and receiver of the present base station in the formula of

$$w_i = \tilde{w}_i w_{c,k} \ .$$

According to a second aspect of the invention, there is provided a method of calibrating an antenna over the air in a base station of a CoMP-based TDD communication system, wherein the method includes the steps of:

A. calculating the relative reciprocity $\tilde{w}_i$ of each pair of base station transmitter and receiver of the present base station relative to a mobile station transmitter and receiver, wherein i represents the $i^{th}$ pair of base station transmitter and receiver among a plurality of pairs of base station transmitters and receivers of the present base station, and i=1, 2, ..., N; and

B. calculating a global relative calibration weight $\hat{w}_i$ of each pair of base station transmitter and receiver of the present base station from a received global

reference $\tilde{w}_s$ in the formula of

$$\hat{w}_i = \frac{\tilde{w}_i}{\tilde{w}_s} \ ,$$

wherein s=1, 2, ..., L, and L represents the number of pairs of base station transmitters and receivers of all the cooperative base stations in the CoMP-based TDD communication system.

According to a third aspect, there is provided a method of assisting in calibrating an antenna over the air in a mobile station of a CoMP-based TDD communication system, wherein the method includes the steps of:

i. receiving, at mobile station receiver of the present mobile station, a plurality of orthogonal calibration signals from a plurality of base station transmitters of each of a plurality of base stations;

ii. measuring a channel response $h_{t,i} = h_{bt,i} h_{Al,i} h_{mr}$ of a transmitter calibration loop corresponding to each base station from the plurality of received orthogonal calibration signals, and transmitting the channel response to each base station, wherein $h_{bt,i}$ represents a channel response of the $i^{th}$ base station transmitter of the present base station, $h_{Al,i}$ represents a channel response of an air interface of the present base station, and $h_{mr}$ represents a channel response of the mobile station receiver; and

iii. transmitting calibration signals from a mobile station transmitter of the present mobile station to a plurality of base station receivers of each of the plurality of base stations.

According to a fourth aspect of the invention, there is provided a self-calibrating device for self-calibrating an antenna in a base station of a CoMP-based TDD communication system, wherein the self-calibrating device includes:

first calculating means for calculating the relative reciprocity $\tilde{w}_i$ of each pair of base station transmitter and receiver of the present base station relative to a calibration transmitter and receiver, and calculating the relative reciprocity $\overline{w}_i$ of each pair of base station transmitter and receiver of the present base station relative to a reference base station transmitter and receiver by selecting one pair of base station transmitter and receiver as the reference base station transmitter and receiver, wherein i represents the $i^{th}$ pair of base station transmitter and receiver among a plurality of pairs of base station transmitters and receivers of the present base station, and i=1, 2, ..., N;

first measuring means for transmitting a measurement signal from the calibration transmitter of the present base station to the calibration receiver, and measuring a channel response $h_{c,k}$ of the calibration transmitter and receiver of the present base station, wherein $h_{c,k} = h_{ct,k}h_{cr,k}$, k indicates that the present base station is the kth base station in the CoMP-based TDD communication system, and k=1, 2, ..., M; and M represents the total number of cooperative base stations in the CoMP-based TDD communication system;

second measuring means for measuring a channel response $h_{cr,k}$ of the calibration receiver of the present base station;

second calculating means for calculating the absolute reciprocity $w_{c,k}$ of the calibration transmitter and receiver of the present base station in the formula of

$$ w_{c,k} = \frac{h_{c,k}}{\left(h_{cr,k}\right)^2} \; ; $$

and

third calculating means for calculating a global relative calibration weight $\hat{w}_i$ of each pair of base station transmitter and receiver of the present base station from an acquired global reference $w_m$ in the formula of

$$ \hat{w}_i = \overline{w}_i \, \frac{w_t}{w_m} \, , $$

wherein $w_t$ represents the absolute reciprocity of the reference base station transmitter and receiver of the present base station, $w_t = \tilde{w}_t w_{c,k}$ , and $w_m$ represents the absolute reciprocity of the reference base station transmitter and receiver of the present base station or the absolute reciprocity of a reference base station transmitter and receiver of one of the other cooperative base stations.

According to a fifth aspect of the invention, there is provided an over-the-air calibrating device for calibrating an antenna over the air in a base station of a CoMP-based TDD communication system, wherein the over-the-air calibrating device includes:

eighth calculating means for calculating the relative reciprocity $\tilde{w}_i$ of each pair of base station transmitter and receiver of the present base station relative to a mobile station transmitter and receiver, wherein i represents the ith pair of base station transmitter and receiver among a plurality of pairs of base station transmitters and receivers of the present base station, and i=1, 2, ..., N; and

ninth calculating means for calculating a global relative calibration weight $\hat{w}_i$ of each pair of base station transmitter and receiver of the present base station from a received global reference $\tilde{w}_s$ in the formula of

$$ \hat{w}_i = \frac{\tilde{w}_i}{\tilde{w}_s} \, , $$

wherein s=1, 2, ..., L, and L represents the number of pairs of base station transmitters and receivers of all the cooperative base stations in the CoMP-based TDD communication system.

According to a sixth aspect of the invention, there is provided an assistant over-the-air calibrating device of assisting in calibrating an antenna over the air in a mobile station of a CoMP-based TDD communication system, wherein the assistant over-the-air calibrating device includes:

third receiving means for receiving, at mobile station receiver of the present mobile station, a plurality of orthogonal calibration signals from a plurality of base station transmitters of each of a plurality of base stations;

sixth measuring means for measuring a channel response $h_{t,i} = h_{bt,i}h_{AI,i}h_{mr}$ of a transmitter calibration loop corresponding to each base station from the plurality of received orthogonal calibration signals, and transmitting the channel response to each base station, wherein $h_{bt,i}$ represents a channel response of the ith base station transmitter of the present base station, $h_{al,i}$ represents a channel response of the air interface of the present base station, and $h_{mr}$ represents a channel response of the mobile station receiver; and

third transmitting means for transmitting calibration signals from a mobile station transmitter of the present mobile station to a plurality of base station receivers of each of the plurality of base stations.

The technical solutions of the invention can be applicable in antenna calibration of a CoMP-based TDD radio communication system.

**Brief Description of the Drawings**

Other objects, features and advantages of the invention will become more apparent and prominent upon reading the following description of non-limiting embodiments with reference to the drawings in which:

Fig.1 illustrates a schematic diagram of an application scenario for traditional self-calibration of an antenna in a single cell in the prior art;

Fig.2 illustrates a schematic diagram of an application scenario for traditional over-the-air calibration of an antenna in a single cell in the prior art;

Fig.3 illustrates a schematic diagram of an application scenario for self-calibration of an antenna in a CoMP-based TDD communication system according to an embodiment of the invention;

Fig.4 illustrates a flow chart of a method of self-calibrating an antenna in a base station of a CoMP-based TDD communication system according to an embodiment of the invention;

Fig.5 illustrates a schematic diagram of an application scenario for over-the-air calibration of an antenna in a CoMP-based TDD communication system according to an embodiment of the invention; and

Fig.6 illustrates a flow chart of a method of calibrating an antenna over the air in a base station of a CoMP-based TDD communication system according to an embodiment of the invention.

In the drawings, identical or like reference numerals identify identical or like step features/means (modules).

## Detailed Description of the Invention

The technical solutions of the invention will be described hereinafter with reference to the drawings.

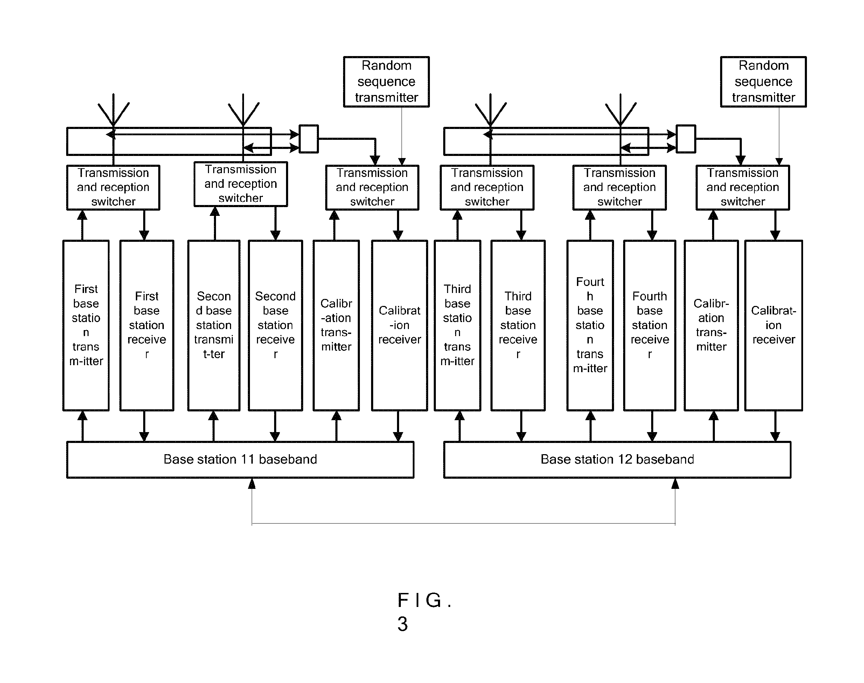

Fig.3 illustrates a schematic diagram of an application scenario for self-calibration of an antenna in a CoMP-based TDD communication system according to an embodiment of the invention.

It shall be noted that only two cooperative base stations each with two antennas will be described in Fig. 3 simply by way of an example. Those ordinarily skilled in the art shall appreciate that the number of cooperative base stations and also the number of antennas of each base station can be more than two in a specific application.

As illustrated, a base station 11 includes two pairs of base station transmitters and receivers, which are respectively a first base station transmitter and receiver including a first base station transmitter and a first base station receiver, and a second base station transmitter and receiver including a second base station transmitter and a second base station receiver. The base station 11 further includes a pair of calibration transmitter and receiver, i.e., a calibration transmitter and a calibration receiver. Furthermore each antenna of the base station 11 is controlled by a transmission and reception switcher to transmit and receive signals in time division.

Also a base station 12 includes two pairs of base station transmitters and receivers, which are respectively a third base station transmitter and receiver including a third base station transmitter and a third base station receiver, and a fourth base station transmitter and receiver including a fourth base station transmitter and a fourth base station receiver. The base station 12 further includes a pair of calibration transmitter and receiver, i.e., a calibration transmitter and a calibration receiver. Furthermore each antenna of the base station 12 is controlled by a transmission and reception switcher to transmit and receive signals in time division.

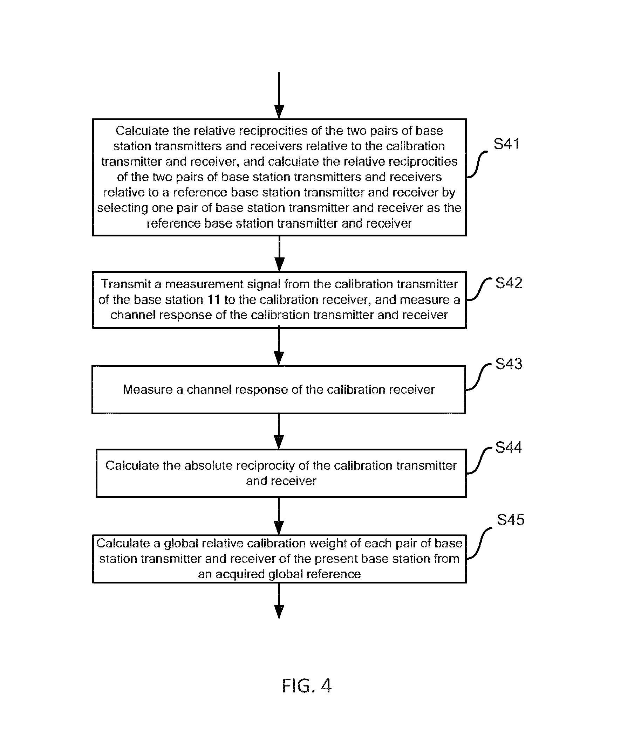

Fig.4 illustrates a flow chart of a method of self-calibrating an antenna in a base station of a CoMP-based TDD communication system according to an embodiment of the invention.

A method of self-calibrating an antenna in a base station of a CoMP-based TDD communication system according to an embodiment of the invention will be described below with reference to Fig.4 in conjunction with Fig.3.

For the base station 11, firstly in the step S41, the base station 11 calculates the relative reciprocities $\widetilde{w}_i$ of the two pairs of base station transmitters and receivers (i.e. the first base station transmitter and the first base station receiver, and the second base station transmitter and the second base station receiver) relative to the calibration transmitter and receiver, and calculates the relative reciprocities $\overline{w}_i$ of the two pairs of base station transmitters and receivers relative to a reference base station transmitter and receiver by selecting one of the two pairs of base station transmitters and receivers as the reference base station transmitter and receiver, where i=1, 2.

In particular, firstly two orthogonal calibration signals are transmitted concurrently from the first base station transmitter and the second base station transmitter of the base station 11 to the calibration receiver of the base station 11, and the base station 11 measures a channel response $h_{t,i} = h_{bt,i}h_{cr}$ of a transmitter calibration loop, where $h_{bt,i}$ represents a channel response of the i$^{th}$ base station transmitter of the base station 11, and $h_{cr}$ represents a channel response of the calibration receiver of the base station 11.

And calibration signals are transmitted respectively from the calibration transmitter of the base station 11 to the first base station receiver and the second base station receiver of the base station 11, and the base station 11 measures a channel response $h_{r,i} = h_{ct}h_{br,i}$ of a receiver calibration loop, where $h_{br,i}$ represents a channel response of the i$^{th}$ base station receiver of the base station 11, and $h_{ct}$ represents a channel response of the calibration transmitter of the base station 11.

Then the base station 11 calculates the relative reciprocities of the two pairs of base station transmitters and receivers relative to the calibration transmitter and receiver in the formula of

$$\widetilde{w}_i = \frac{h_{t,i}}{h_{r,i}} \,.$$

Where i=1, 2.

Next the base station 11 selects one of the two pairs of base stations transmitters and receivers, e.g., the first base station transmitter and receiver, as the reference base station transmitter and receiver, and calculates the relative reciprocity, e.g., $\widetilde{w}_t$, of the reference base station transmitter and receiver relative to the calibration transmitter and receiver.

Finally the base station 11 calculates the relative reciprocities $\overline{w}_i$ of the two pairs of base station transmitters and receivers relative to the reference base station transmitter and receiver in the formula of

$$\overline{w}_i = \frac{\widetilde{w}_i}{\widetilde{w}_t} \,.$$

Where $\widetilde{w}_t$ represents the relative reciprocity of the reference base station transmitter and receiver relative to the calibration transmitter and receiver, for example, if the first base station transmitter and receiver is selected as the reference base station transmitter and receiver, then $\widetilde{w}_t = \widetilde{w}_1$.

Next in the step S42, a measurement signal is transmitted from the calibration transmitter of the base station 11 to the calibration receiver, and the base station 11 measures a channel response $h_{c,1}$ of the calibration transmitter and receiver, where $h_{c,1} = h_{ct,1}h_{cr,1}$.

Next in the step S43, the base station 11 measures a channel response $h_{cr,1}$ of the calibration receiver.

In particular the base station 11 firstly transmits a random sequence from a random sequence generator to the calibration receiver.

Then the base station 11 measures a channel response $h_3 = h_{RSG,1}h_{cr,1}$ of the sequence generator and the calibration receiver

Where $h_{RSG,1}$ represents a channel response of the random sequence generator of the base station 11, and $h_{cr,1}$ represents the channel response of the calibration receiver of the base station 11.

Furthermore a random sequence can be transmitted more than once from the random sequence generator to measure and then average a plurality of $h_3$ for measurement accuracy.

Finally the channel response $h_{cr,1}$ of the calibration receiver of the base station 11 is calculated in the formula of

$$h_{cr,1} = \frac{h_3}{h_{RSG,1}} \,.$$

Where $h_{RSG,1}$ represents the channel response of the random sequence generator of the base station 11, which can be measured in a factory and stored in an ROM of the base station 11.

Next in the step S44, the base station 11 calculates the absolute reciprocity $w_{c,1}$ of the calibration transmitter and receiver in the formula of

$$w_{c,1} = \frac{h_{c,1}}{\left(h_{cr,1}\right)^2} \,.$$

Finally in the step S45, the base station 11 calculates a global relative calibration weight $\hat{w}_i$ of each pair of base station transmitter and receiver of the present base station from an acquired global reference $w_m$ in the formula of

$$\hat{w}_i = \overline{w}_i \frac{w_t}{w_m} \,.$$

Where $w_t$ represents the absolute reciprocity of the reference base station transmitter and receiver of the base station 11, and $w_t = \widetilde{w}_t w_{c,k}$, for example, $w_1 = \widetilde{w}_1 w_{c,1}$ when $w_t = w_1$. $w_m$ represents the absolute reciprocity of the reference base station transmitter and receiver of the present base station 11 or the absolute reciprocity of a reference base station transmitter and receiver of the cooperative base station 12.

Wherein i=1, 2. $\hat{w}_1$ represents a global relative calibration weight of the first base station transmitter and receiver of the base station 11, and $\hat{w}_2$ represents a global relative calibration weight of the second base station transmitter and receiver of the base station 11.

The global reference $w_m$ is selected by and notified in an instruction from a CoMP scheduler to the base station 11 or the base station 12. The base station 11 or the base station 12 notifies the global reference $w_m$ to the other base station over a logic link, e.g., X.2, between the two base stations upon acquisition thereof.

Optionally the base station 11 can further calculate absolute calibration weights $w_i$ of the two pairs of base station transmitters and receivers from the calculated global relative calibration weights $\hat{w}_i$ of the two pairs of base station transmitters and receivers in the formula of

$$w_i = \widetilde{w}_i w_{c,1}$$

Wherein i=1, 2.

For the base station 12, the base station 12 can acquire global relative calibration weights $\hat{w}_i$ of the two pairs of base station transmitters and receivers (i.e. the third base station transmitter and receiver and the fourth base station transmitter and receiver) as in the foregoing step:

$$\hat{w}_i = \overline{w}_i \frac{w_{t'}}{w_m}.$$

Where $w_{t'}$ represents the absolute reciprocity of the reference base station transmitter and receiver of the base station 12, and $w_{t'} = \widetilde{w}_{t'} w_{c,2}$, for example, $w_3 = \widetilde{w}_3 w_{c,2}$ when $w_{t'} = w_3$. $w_m$ represents the absolute reciprocity of the reference base station transmitter and receiver of the present base station 12 or the absolute reciprocity of a reference base station transmitter and receiver of the cooperative base station 11.

Wherein i=3, 4. $\hat{w}_3$ represents a global relative calibration weight of the third base station transmitter and receiver of the base station 12, and $\hat{w}_4$ represents a global relative calibration weight of the fourth base station transmitter and receiver of the base station 12.

Optionally the base station 12 can further calculate absolute calibration weights $w_i$ of the two pairs of base station transmitters and receivers from the calculated global relative calibration weights $\hat{w}_i$ of the two pairs of base station transmitters and receivers in the formula of

$$w_i = \widetilde{w}_i w_{c,1}$$

Wherein i=3, 4.

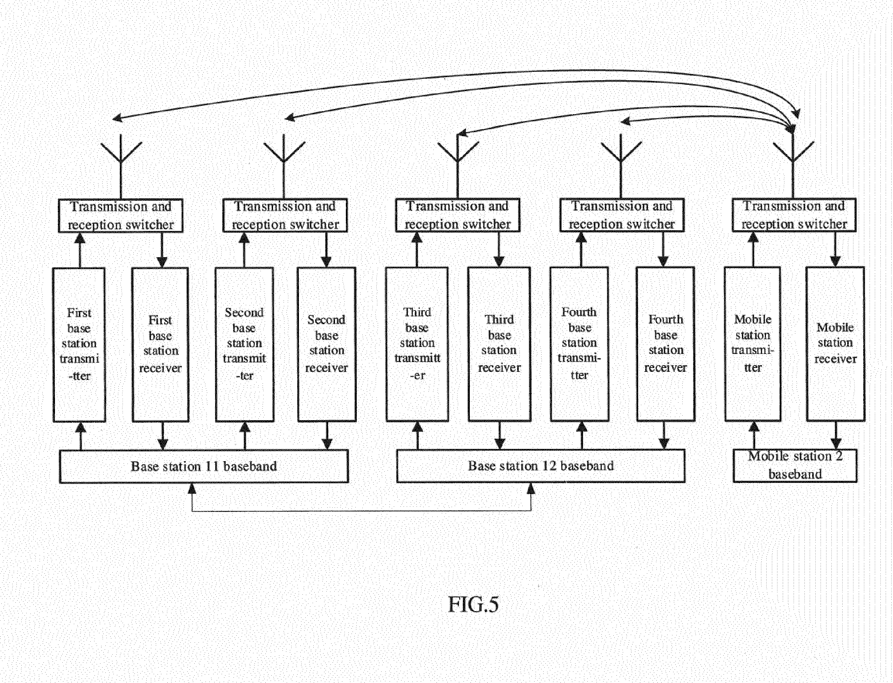

Fig.5 illustrates a schematic diagram of an application scenario for over-the-air calibration of an antenna in a CoMP-based TDD communication system according to an embodiment of the invention.

It shall be noted that only two cooperative base stations each with two antennas will be described in Fig. 5 by way of an example. Those ordinarily skilled in the art shall appreciate that the number of cooperative base stations and also the number of antennas of each base station can be more than two in a specific application.

As illustrated, there are two pairs of base station transmitters and receivers, which are respectively a first base station transmitter and receiver including a first base station transmitter and a first base station receiver,

and a second base station transmitter and receiver including a second base station transmitter and a second base station receiver. Furthermore each antenna of the base station 11 is controlled by a transmission and reception switcher to transmit and receive signals in time division.

Also a base station 12 includes two pairs of base station transmitters and receivers, which are respectively a third base station transmitter and receiver including a third base station transmitter and a third base station receiver, and a fourth base station transmitter and receiver including a fourth base station transmitter and a fourth base station receiver. Furthermore each antenna of the base station 12 is controlled by a transmission and reception switcher to transmit and receive signals in time division.

A mobile station 2 includes a pair of mobile station transmitter and receiver, i.e., a mobile station transmitter and a mobile station receiver, and includes an antenna controlled by a transmission and reception switcher to transmit and receive signals in time division.

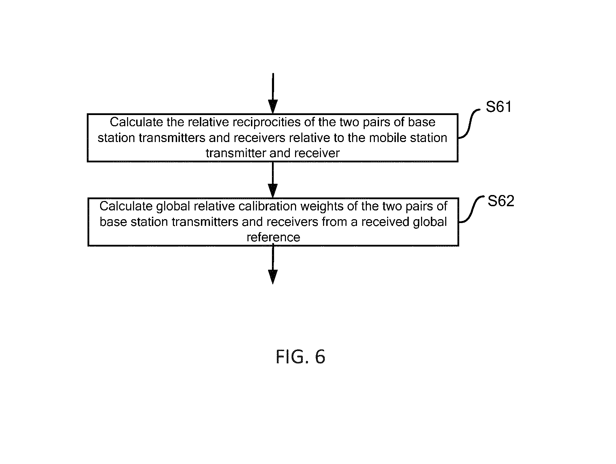

Fig.6 illustrates a flow chart of a method of calibrating an antenna over the air in a base station of a CoMP-based TDD communication system according to an embodiment of the invention.

A method of calibrating an antenna over the air in a base station of a CoMP-based TDD communication system according to an embodiment of the invention will be described below with reference to Fig.6 in conjunction with Fig.5.

For the base station 11, firstly in the step S61, the base station 11 calculates the relative reciprocities $\widetilde{w}_i$ of the two pairs of base station transmitters and receivers (i.e. the first base station transmitter and the first base station receiver, and the second base station transmitter and the second base station receiver) relative to the mobile station transmitter and receiver, where i=1, 2.

In particular, the base station 11 firstly transmits two orthogonal calibration signals concurrently from the first base station transmitter and the second base station transmitter to the mobile station receiver of the mobile station 2.

The mobile station 2 receives at mobile station receiver the two orthogonal calibration signals transmitted from the first base station transmitter and the second base station transmitter of the base station 11, and then measures a channel response $h_{t,i} = h_{bt,i} h_{AI,i} h_{mr}$ of a transmitter calibration loop of the base station 11 and transmits the channel response to the base station 11 and the base station 12, where $h_{bt,i}$ represents a channel response of the ith base station transmitter of the base station 12, $h_{AI,i}$ represents a channel response of an air interface of the base station 12, and $h_{mr}$ represents a channel response of the mobile station receiver of the mobile station 2.

The base station 11 receives the channel response $h_{t,i} = h_{bt,i} h_{AI,i} h_{mr}$ of the transmitter calibration loop corresponding to the base station 11 from the mobile station 2.

Also the mobile station 2 transmits calibration signals from the mobile station transmitter to the first base station receiver and the second base station receiver of the base station 11.

The base station 11 receives at the first base station receiver and the second base station receiver the calibration signals transmitted from the mobile station transmitter of the mobile station 2 and then measures a channel response $h_{r,i} = h_{mt}h_{Ai,i}h_{br,i}$ of a receiver calibration loop of the base station 11, where $h_{AI,i}$ represents a channel response of an air interface of the base station 11, $h_{br,i}$ represents a channel response of the $i^{th}$ base station receiver of the base station 11, and $h_{mt}$ represents a channel response of the mobile station transmitter of the mobile station 2.

The base station 11 then calculates the relative reciprocities of the two pairs of base station transmitters and receivers relative to the mobile station transmitter and receiver in the formula of

$$\widetilde{w}_i = \frac{h_{t,i}}{h_{r,i}} .$$

Where i=1, 2.

Next in the step S62, the base station 11 calculates global relative calibration weights $\hat{w}_i$ of the two pairs of base station transmitters and receivers from a received global reference $\widetilde{w}_s$ in the formula of

$$\hat{w}_i = \frac{\widetilde{w}_i}{\widetilde{w}_s} .$$

Where i=1, 2. $\hat{w}_1$ represents the global relative calibration weight of the first base station transmitter and receiver of the base station 11, and $\hat{w}_2$ represents the global relative calibration weight of the second base station transmitter and receiver of the base station 11.

The base station 12 can acquire global relative calibration weights $\hat{w}_i$ of the two pairs of base station transmitters and receivers of the base station 12 as in the foregoing step:

$$\hat{w}_i = \frac{\widetilde{w}_i}{\widetilde{w}_s} .$$

Where i=3, 4. $\hat{w}_3$ represents the global relative calibration weight of the third base station transmitter and receiver of the base station 12, and $\hat{w}_4$ represents the global relative calibration weight of the fourth base station transmitter and receiver of the base station 12.

Where s=1 or 2 or 3 or 4.

The global reference $\widetilde{w}_s$ is selected by and notified in an instruction from a CoMP scheduler to the base station 11 or the base station 12. The base station 11 or the base station 12 notifies the global reference $\widetilde{w}_s$ to the other base station over a logic link, e.g., X.2, between the two base stations upon acquisition thereof.

The technical solutions of the invention have been described above from the perspective of steps of method and will been further described below from the perspective of modules of a device.

Respective modules included in a self-calibrating device for self-calibrating an antenna in a base station of a CoMP-based TDD communication system according to an embodiment of the invention will be described below with reference to Fig.3. Reference can be made here to the foregoing description of Fig.3.

A self-calibrating device for self-calibrating an antenna in a base station of a CoMP-based TDD communication system according to an embodiment of the invention includes:

First calculating means is for calculating the relative reciprocity $\widetilde{w}_i$ of each pair of base station transmitter and receiver of the present base station relative to a calibration transmitter and receiver, and calculating the relative reciprocity $\overline{w}_i$ of each pair of base station transmitter and receiver of the present base station relative to a reference base station transmitter and receiver by selecting one pair of base station transmitter and receiver as the reference base station transmitter and receiver, where i represents the $i^{th}$ pair of base station transmitter and receiver among a plurality of pairs of base station transmitters and receivers of the present base station, and i=1, 2, ..., N.

First measuring means is for transmitting a measurement signal from the calibration transmitter of the present base station to the calibration receiver, and measuring a channel response $h_{c,k}$ of the calibration transmitter and receiver of the present base station, where $h_{c,k} = h_{ct,k}h_{cr,k}$, k indicates that the present base station is the $k^{th}$ base station in the CoMP-based TDD communication system, and k=1, 2, ..., M; and M represents the total number of cooperative base stations in the CoMP-based TDD communication system.

Second measuring means is for measuring a channel response $h_{cr,k}$ of the calibration receiver of the present base station.

Second calculating means is for calculating the absolute reciprocity $w_{c,k}$ of the calibration transmitter and receiver of the present base station in the formula of

$$w_{c,k} = \frac{h_{c,k}}{\left(h_{cr,k}\right)^2} \,.$$

Third calculating means is for calculating a global relative calibration weight $\hat{w}_i$ of each pair of base station transmitter and receiver of the present base station from an acquired global reference $w_m$ in the formula of

$$\hat{w}_i = \overline{w}_i \, \frac{w_t}{w_m} \,.$$

Where $w_t$ represents the absolute reciprocity of the reference base station transmitter and receiver of the present base station, $w_t = \widetilde{w}_t w_{c,k}$ , and $w_m$ represents the absolute reciprocity of the reference base station transmitter and receiver of the present base station or the absolute reciprocity of a reference base station transmitter and receiver of one of the other cooperative base stations.

Preferably the self-calibrating device further includes:

Fourth calculating means is for calculating the absolute calibration weight $w_i$ of each pair of base station transmitter and receiver of the present base station from the calculated global relative calibration weight $\hat{w}_i$ of each pair of base station transmitter and receiver of the present base station in the formula of

$$w_i = \widetilde{w}_i w_{c,k} \,.$$

Optionally the third calculating means further includes:

First receiving means is for receiving the global reference $w_m$ from one of the other cooperative base stations.

Eleventh calculating means is for calculating the global relative calibration weight $\hat{w}_i$ of each pair of base station transmitter and receiver of the present base station from the received global reference $w_m$ in the formula of

$$\hat{w}_i = \overline{w}_i \, \frac{w_t}{w_m} \,.$$

Where $w_t$ represents the absolute reciprocity of the reference base station transmitter and receiver of the present base station, and $w_m$ represents the absolute reciprocity of the reference base station transmitter and receiver of one of the other cooperative base stations.

Optionally the third calculating means further includes:

Third transmitting means is for transmitting the absolute reciprocity of the reference transmitter and receiver of the present base station to the other cooperative base stations as the global reference $w_m$ over logic links between the present base station and the other cooperative base stations.

Twelfth calculating means is for calculating the global relative calibration weight $\hat{w}_i$ of each pair of base station transmitter and receiver of the present base station from the global reference $w_m$ in the formula of

$$\hat{w}_i = \overline{w}_i \, \frac{w_t}{w_m}$$

Where both $w_t$ and $w_m$ represent the absolute reciprocity of the reference base station transmitter and receiver of the present base station.

Preferably the second measuring means includes:

First transmitting means is for transmitting a random sequence from a random sequence generator of the present base station to the calibration receiver of the present base station.

Third measuring means is for measuring a channel response $h_3 = h_{RSG,k} h_{cr,k}$ of the sequence generator and the calibration receiver, wherein $h_{RSG,k}$ represents a channel response of the random sequence generator of the present base station, and $h_{cr,k}$ represents the channel response of the calibration receiver of the present base station.

Fifth calculating means is for calculating the channel response $h_{cr,k}$ of the calibration receiver of the present base station in the formula of

$$h_{cr,k} = \frac{h_3}{h_{RSG,k}} \,.$$

Preferably the first calculating means includes:

Fourth measuring means is for transmitting a plurality of orthogonal calibration signals concurrently from a plurality of base station transmitters of the present base station to the calibration receiver of the present base station, and measuring a channel response $h_{t,i} =$

$h_{bt,i}h_{cr}$ of a transmitter calibration loop, where $h_{bt,i}$ represents a channel response of the ith base station transmitter of the present base station, and $h_{cr}$ represents the channel response of the calibration receiver of the present base station; and for transmitting calibration signals respectively from the calibration transmitter of the present base station to a plurality of base station receivers of the present base station, and measuring a channel response $h_{r,i} = h_{ct}h_{br,i}$ of a receiver calibration loop, where $h_{br,i}$ represents a channel response of the ith base station receiver of the present base station, and $h_{ct}$ represents a channel response of the calibration transmitter of the present base station.

Sixth calculating means is for calculating the relative reciprocity of each pair of base station transmitter and receiver of the present base station relative to the calibration transmitter and receiver in the formula of

$$\widetilde{w}_i = \frac{h_{t,i}}{h_{r,i}}.$$

Selecting means is for selecting one of the plurality of pairs of base station transmitters and receivers of the present base station as the reference base station transmitter and receiver, and calculating the relative reciprocity $\widetilde{w}_t$ of the reference base station transmitter and receiver relative to the calibration transmitter and receiver.

Seventh calculating means is for calculating the relative reciprocity $\overline{w}_i$ of each pair of base station transmitter and receiver of the present base station relative to the reference base station transmitter and receiver in the formula of

$$\overline{w}_i = \frac{\widetilde{w}_i}{\widetilde{w}_t}.$$

Modules included in an over-the-air calibrating device of calibrating an antenna over the air in a base station of a CoMP-based TDD communication system according to an embodiment of the invention and modules included in an assistant over-the-air calibrating device for assisting in calibrating an antenna over the air in a mobile station of a CoMP-based TDD communication system according to an embodiment of the invention will be described below with reference to Fig.5.

An over-the-air calibrating device for calibrating an antenna over the air in a base station of a CoMP-based TDD communication system according to an embodiment of the invention includes:

Eighth calculating means is for calculating the relative reciprocity $\widetilde{w}_i$ of each pair of base station transmitter and receiver of the present base station relative to a mobile station transmitter and receiver, where i represents the ith pair of base station transmitter and receiver among a plurality of pairs of base station transmitters and receivers of the present base station, and i=1, 2, ..., N.

Ninth calculating means is for calculating a global relative calibration weight $\hat{w}_i$ of each pair of base station transmitter and receiver of the present base station from a received global reference $\widetilde{w}_s$. in the formula of

$$\hat{w}_i = \frac{\widetilde{w}_i}{\widetilde{w}_s}.$$

Where s=1, 2, ..., L, and L represents the number of pairs of base station transmitters and receivers of all the cooperative base stations in the CoMP-based TDD communication system.

Preferably the eighth calculating means includes:

Second transmitting means is for transmitting a plurality of orthogonal calibration signals concurrently from a plurality of base station transmitters of the present base station to the mobile station receiver of a mobile station.

Second receiving means is for receiving a channel response $h_{t,i} = h_{bt,i}h_{Al,i}h_{mr}$ of a transmitter calibration loop corresponding to the present base station from the mobile station, where $h_{bt,i}$ represents a channel response of the ith base station transmitter of the present base station, $h_{Al,i}$ represents a channel response of an air interface of the present base station, and $h_{mr}$ represents a channel response of the mobile station receiver.

Fifth measuring means is for measuring a channel response $h_{r,i} = h_{mt}h_{Ai,i}h_{br,i}$ of a receiver calibration loop corresponding to the present base station from received calibration signals transmitted from the mobile station transmitter of the mobile station to a plurality of base station receivers of the present base station, where $h_{Al,i}$ represents a channel response of the air interface, $h_{br,i}$ represents a channel response of the ith base station receiver, and $h_{mt}$ represents a channel response of the mobile station transmitter.

Tenth calculating means is for calculating the relative reciprocity of each pair of base station transmitter and receiver of the present base station relative to the mobile station transmitter and receiver in the formula of

$$\widetilde{w}_i = \frac{h_{t,i}}{h_{r,i}}.$$

An assistant over-the-air calibrating device for assisting in calibrating an antenna over the air in a mobile station of a CoMP-based TDD communication system accoriding to an embodiment of the invention includes:

Third receiving means is for receiving, at mobile station receiver of the present mobile station, a plurality of orthogonal calibration signals from a plurality of base station transmitters of each of a plurality of base stations.

Sixth measuring means is for measuring a channel response $h_{t,i} = h_{bt,i}h_{AI,i}h_{mr}$ of a transmitter calibration loop corresponding to each base station from the plurality of received orthogonal calibration signals, and transmitting the channel response to each base station, where $h_{bt,i}$ represents a channel response of the $i^{th}$ base station transmitter of the present base station, $h_{AI,i}$ represents a channel response of an air interface of the present base station, and $h_{mr}$ represents a channel response of the mobile station receiver.

Third transmitting means for transmitting calibration signals from a mobile station transmitter of the present mobile station to a plurality of base station receivers of each of the plurality of base stations.

Although the invention has been illustrated and described in details in the drawings and the foregoing description, it shall be appreciated that the illustration and the description are merely illustrative and explemary but not limiting, and the invention will not be limited to the foregoing embodiments.

Those ordinarily skilled in the art can appreciate and make other modifications to the disclosed embodiments from upon reading the description, the disclosed teaching and drawings and the appended claims. In the claims, the term "comprise(s)/comprising" will not preclude other elements and steps, and the term "a(an)" will not preclude plural. A component may perform functions of a plurality of technical features recited in the claims in a practical application of the invention. Any reference numeral in the claims shall not be taken as limiting the scope of the invention.

**Claims**

1.  A method of self-calibrating an antenna in a base station of a CoMP-based TDD communication system, wherein the method comprises the steps of

    a. calculating the relative reciprocity $\tilde{w}_i$ of each pair of base station transmitter and receiver of the present base station relative to a calibration transmitter and receiver, and calculating the relative reciprocity $\overline{w}_i$ of each pair of base station transmitter and receiver of the present base station relative to a reference base station transmitter and receiver by selecting one pair of base station transmitter and receiver as the reference base station transmitter and receiver, wherein i represents the $i^{th}$ pair of base station transmitter and receiver among a plurality of pairs of base station transmitters and receivers of the present base station, and i=1, 2, ..., N;

b. transmitting a measurement signal from the calibration transmitter of the present base station to the calibration receiver, and measuring a channel response $h_{c,k}$ of the calibration transmitter and receiver of the present base station, wherein $h_{c,k} = h_{ct,k}h_{cr,k}$, k indicates that the present base station is the $k^{th}$ base station in the CoMP-based TDD communication system, and k=1, 2, ..., M; and M represents the total number of cooperative base stations in the CoMP-based TDD communication system;

c. measuring a channel response $h_{cr,k}$ of the calibration receiver of the present base station;

d. calculating the absolute reciprocity $w_{c,k}$ of the calibration transmitter and receiver of the present base station in the formula of

$$w_{c,k} = \frac{h_{c,k}}{(h_{cr,k})^2} \; ;$$

and

e. calculating a global relative calibration weight $\hat{w}_i$ of each pair of base station transmitter and receiver of the present base station from an acquired global reference $w_m$ in the formula of

$$\hat{w}_i = \overline{w}_i \frac{w_t}{w_m} \; ,$$

wherein $w_t$ represents the absolute reciprocity of the reference base station transmitter and receiver of the present base station, $w_t = \tilde{w}_t w_{c,k}$, and $w_m$ represents the absolute reciprocity of the reference base station transmitter and receiver of the present base station or the absolute reciprocity of a reference base station transmitter and receiver of one of the other cooperative base stations.

2.  The method according to claim 1, wherein after the step e, the method further comprises the step of:

    f. calculating the absolute calibration weight $w_i$ of each pair of base station transmitter and receiver of the present base station from the calculated global relative calibration weight $\hat{w}_i$ of each pair of base station transmitter and receiver of the present base station in the formula of

$$W_i = \widetilde{W}_i W_{c,k} \; .$$

**3.** The method according to claim 1, wherein the step e further comprises the steps of:

> e1. receiving the global reference $w_m$ from one of the other cooperative base stations; and
> e2. calculating the global relative calibration weight $\hat{w}_i$ of each pair of base station transmitter and receiver of the present base station from the received global reference $w_m$ in the formula of

$$\hat{W}_i = \overline{W}_i \frac{W_t}{W_m} \, ,$$

> wherein $w_t$ represents the absolute reciprocity of the reference base station transmitter and receiver of the present base station, and $w_m$ represents the absolute reciprocity of the reference base station transmitter and receiver of one of the other cooperative base stations.

**4.** The method according to claim 1, wherein the step e further comprises the steps of:

> e1'. transmitting the absolute reciprocity of the reference transmitter and receiver of the present base station to the other cooperative base stations as the global reference $w_m$ over logic links between the present base station and the other cooperative base stations; and
> e2'. calculating the global relative calibration weight $\hat{w}_i$ of each pair of base station transmitter and receiver of the present base station from the global reference $w_m$ in the formula of

$$\hat{W}_i = \overline{W}_i \frac{W_t}{W_m}$$

> wherein both $w_t$ and $w_m$ represent the absolute reciprocity of the reference base station transmitter and receiver of the present base station.

**5.** The method according to claim 1, wherein the step c comprises the steps of:

> c1. transmitting a random sequence from a random sequence generator of the present base station to the calibration receiver of the present base station;

c2. measuring a channel response $h_3 = h_{RSG,k}h_{cr,k}$ of the sequence generator and the calibration receiver, wherein $h_{RSG,k}$ represents a channel response of the random sequence generator of the present base station, and $h_{cr,k}$ represents the channel response of the calibration receiver of the present base station; and

c3. calculating the channel response $h_{cr,k}$ of the calibration receiver of the present base station in the formula of

$$h_{cr,k} = \frac{h_3}{h_{RSG,k}} \; .$$

**6.** The method according to claim 1, the step a comprises the steps of:

> a1. transmitting a plurality of orthogonal calibration signals concurrently from a plurality of base station transmitters of the present base station to the calibration receiver of the present base station, and measuring a channel response $h_{t,i} = h_{bt,i}h_{cr}$ of a transmitter calibration loop, wherein $h_{bt,i}$ represents a channel response of the $i^{th}$ base station transmitter of the present base station, and $h_{cr}$ represents the channel response of the calibration receiver of the present base station; and transmitting calibration signals respectively from the calibration transmitter of the present base station to a plurality of base station receivers of the present base station, and measuring a channel response $h_{r,i} = h_{ct}h_{br,i}$ of a receiver calibration loop, wherein $h_{br,i}$ represents a channel response of the $i^{th}$ base station receiver of the present base station, and $h_{ct}$ represents a channel response of the calibration transmitter of the present base station;
> a2. calculating the relative reciprocity of each pair of base station transmitter and receiver of the present base station relative to the calibration transmitter and receiver in the formula of

$$\widetilde{W}_i = \frac{h_{t,i}}{h_{r,i}} \; ;$$

> a3. selecting one of the plurality of pairs of base station transmitters and receivers of the present base station as the reference base station transmitter and receiver, and calculating the relative reciprocity $\widetilde{w}_t$ of the

reference base station transmitter and receiver relative to the calibration transmitter and receiver; and

a4. calculating the relative reciprocity $\overline{w}_i$ of each pair of base station transmitter and receiver of the present base station relative to the reference base station transmitter and receiver in the formula of

$$\overline{w}_i = \frac{\widetilde{w}_i}{\widetilde{w}_t} .$$

7. A method of calibrating an antenna over the air in a base station of a CoMP-based TDD communication system, wherein the method comprises the steps of:

A. calculating the relative reciprocity $\widetilde{w}_i$ of each pair of base station transmitter and receiver of the present base station relative to a mobile station transmitter and receiver, wherein i represents the ith pair of base station transmitter and receiver among a plurality of pairs of base station transmitters and receivers of the present base station, and i=1, 2, ..., N; and

B. calculating a global relative calibration weight $\hat{w}_i$ of each pair of base station transmitter and receiver of the present base station from a received global reference $\widetilde{w}_s$ in the formula of

$$\hat{w}_i = \frac{\widetilde{w}_i}{\widetilde{w}_s} ,$$

wherein s=1, 2, ..., L, and L represents the number of pairs of base station transmitters and receivers of all the cooperative base stations in the CoMP-based TDD communication system.

8. The method according to claim 7, wherein the step A comprises the steps of:

A1. transmitting a plurality of orthogonal calibration signals concurrently from through a plurality of base station transmitters of the present base station to the mobile station receiver of a mobile station;

A2. receiving a channel response $h_{t,i} = h_{bt,i}h_{AI,i}h_{mr}$ of a transmitter calibration loop corresponding to the present base station from the mobile station, wherein $h_{bt,i}$ represents a channel response of the ith base station transmitter of the present base station, $h_{AI,i}$ represents a channel response of an air interface of the present base station, and $h_{mr}$ represents a channel response of the mobile station receiver;

A3. measuring a channel response $h_{r,i} = h_{mt}h_{Ai,i}h_{br,i}$ of a receiver calibration loop corresponding to the present base station from received calibration signals transmitted from the mobile station transmitter of the mobile station to a plurality of base station receivers of the present base station, wherein $h_{AI,i}$ represents a channel response of the air interface, $h_{br,i}$ represents a channel response of the ith base station receiver, and $h_{mt}$ represents a channel response of the mobile station transmitter; and

A4. calculating the relative reciprocity of each pair of base station transmitter and receiver of the present base station relative to the mobile station transmitter and receiver in the formula of

$$\widetilde{w}_i = \frac{h_{t,i}}{h_{r,i}} .$$

9. A method of assisting in calibrating an antenna over the air in a mobile station of a CoMP-based TDD communication system, wherein the method comprises the steps of:

i. receiving, at mobile station receiver of the present mobile station, a plurality of orthogonal calibration signals from a plurality of base station transmitters of each of a plurality of base stations;

ii. measuring a channel response $h_{t,i} = h_{bt,i}h_{AI,i}h_{mr}$ of a transmitter calibration loop corresponding to each base station from the plurality of received orthogonal calibration signals, and transmitting the channel response to each base station, wherein $h_{bt,i}$ represents a channel response of the ith base station transmitter of the present base station, $h_{AI,i}$ represents a channel response of an air interface of the present base station, and $h_{mr}$ represents a channel response of the mobile station receiver; and

iii. transmitting calibration signals from a mobile station transmitter of the present mobile station to a plurality of base station receivers of each of the plurality of base stations.

10. A self-calibrating device for self-calibrating an antenna in a base station of a CoMP-based TDD communication system, wherein the self-calibrating device comprises:

first calculating means for calculating the relative reciprocity $\tilde{w}_i$ of each pair of base station transmitter and receiver of the present base station relative to a calibration transmitter and receiver, and calculating the relative reciprocity $\overline{w}_i$ of each pair of base station transmitter and receiver of the present base station relative to a reference base station transmitter and receiver by selecting one pair of base station transmitter and receiver as the reference base station transmitter and receiver, wherein i represents the i$^{th}$ pair of base station transmitter and receiver among a plurality of pairs of base station transmitters and receivers of the present base station, and i=1, 2, ..., N;

first measuring means for transmitting a measurement signal from the calibration transmitter of the present base station to the calibration receiver, and measuring a channel response $h_{c,k}$ of the calibration transmitter and receiver of the present base station, wherein $h_{c,k} = h_{ct,k}h_{cr,k}$, k indicates that the present base station is the k$^{th}$ base station in the CoMP-based TDD communication system, and k=1, 2, ..., M; and M represents the total number of cooperative base stations in the CoMP-based TDD communication system;

second measuring means for measuring a channel response $h_{cr,k}$ of the calibration receiver of the present base station;

second calculating means for calculating the absolute reciprocity $w_{c,k}$ of the calibration transmitter and receiver of the present base station in the formula of

$$w_{c,k} = \frac{h_{c,k}}{\left(h_{cr,k}\right)^2} \; ;$$

and

third calculating means for calculating a global relative calibration weight $\hat{w}_i$ of each pair of base station transmitter and receiver of the present base station from an acquired global reference $w_m$ in the formula of

$$\hat{w}_i = \overline{w}_i \frac{w_t}{w_m} ,$$

wherein $w_t$ represents the absolute reciprocity of the reference base station transmitter and receiver of the present base station, $w_t = \tilde{w}_t w_{c,k}$, and $w_m$ represents the absolute reciprocity of the reference base station transmitter and receiver of the present base station or the absolute reciprocity of a reference base station transmitter and receiver of one of the other cooperative base stations.

11. The self-calibrating device according to claim 10, further comprising:

fourth calculating means for calculating the absolute calibration weight $w_i$ of each pair of base station transmitter and receiver of the present base station from the calculated global relative calibration weight $\hat{w}_i$ of each pair of base station transmitter and receiver of the present base station in the formula of

$$W_i = \tilde{W}_i W_{c,k} .$$

12. The self-calibrating device according to claim 10, wherein the second measuring means comprises:

first transmitting means for transmitting a random sequence from a random sequence generator of the present base station to the calibration receiver of the present base station;

third measuring means for measuring a channel response $h_3 = h_{RSG,k}h_{cr,k}$ of the sequence generator and the calibration receiver, wherein $h_{RSG,k}$ represents a channel response of the random sequence generator of the present base station, and $h_{cr,k}$ represents the channel response of the calibration receiver of the present base station; and

fifth calculating means for calculating the channel response $h_{cr,k}$ of the calibration receiver of the present base station in the formula of

$$h_{cr,k} = \frac{h_3}{h_{RSG,k}} .$$

13. The self-calibrating device according to claim 10, wherein the first calculating means comprises:

fourth measuring means for transmitting a plurality of orthogonal calibration signals concurrently from a plurality of base station transmitters of the present base station to the calibration receiver of the present base station, and measuring a channel response $h_{t,i} = h_{bt,i}h_{cr}$ of a transmitter calibration loop, wherein $h_{bt,i}$ represents a channel response of the $i^{th}$ base station transmitter of the present base station, and $h_{cr}$ represents the channel response of the calibration receiver of the present base station; and for transmitting calibration signals respectively from the calibration transmitter of the present base station to a plurality of base station receivers of the present base station, and measuring a channel response $h_{r,i} = h_{ct}h_{br,i}$ of a receiver calibration loop, wherein $h_{br,i}$ represents a channel response of the $i^{th}$ base station receiver of the present base station, and $h_{ct}$ represents a channel response of the calibration transmitter of the present base station;

sixth calculating means for calculating the relative reciprocity of each pair of base station transmitter and receiver of the present base station relative to the calibration transmitter and receiver in the formula of

$$\widetilde{w}_i = \frac{h_{t,i}}{h_{r,i}} ;$$

selecting means for selecting one of the plurality of pairs of base station transmitters and receivers of the present base station as the reference base station transmitter and receiver, and calculating the relative reciprocity $\widetilde{w}_t$ of the reference base station transmitter and receiver relative to the calibration transmitter and receiver; and

seventh calculating means for calculating the relative reciprocity $\overline{w}_i$ of each pair of base station transmitter and receiver of the present base station relative to the reference base station transmitter and receiver in the formula of

$$\overline{w}_i = \frac{\widetilde{w}_i}{\widetilde{w}_t} .$$

14. An over-the-air calibrating device for calibrating an antenna over the air in a base station of a CoMP-based TDD communication system, wherein the over-the-air calibrating device comprises:

eighth calculating means for calculating the relative reciprocity $\widetilde{w}_i$ of each pair of base station transmitter and receiver of the present base station relative to a mobile station transmitter and receiver, wherein i represents the $i^{th}$ pair of base station transmitter and receiver among a plurality of pairs of base station transmitters and receivers of the present base station, and i=1, 2, ..., N; and

ninth calculating means for calculating a global relative calibration weight $\hat{w}_i$ of each pair of base station transmitter and receiver of the present base station from a received global reference $\widetilde{w}_s$ in the formula of

$$\hat{w}_i = \frac{\widetilde{w}_i}{\widetilde{w}_s} ,$$

wherein s=1, 2, ..., L, and L represents the number of pairs of base station transmitters and receivers of all the cooperative base stations in the CoMP-based TDD communication system.

15. The over-the-air calibrating device according to claim 14, wherein the eighth calculating means comprises:

second transmitting means for transmitting a plurality of orthogonal calibration signals concurrently from a plurality of base station transmitters of the present base station to the mobile station receiver of a mobile station;

second receiving means for receiving a channel response $h_{t,i} = h_{bt,i}h_{AI,i}h_{mr}$ of a transmitter calibration loop corresponding to the present base station from the mobile station, wherein $h_{bt,i}$ represents a channel response of the $i^{th}$ base station transmitter of the present base station, $h_{AI,i}$ represents a channel response of an air interface of the present base station, and $h_{mr}$ represents a channel response of the mobile station receiver;

fifth measuring means for measuring a channel response $h_{r,i} = h_{mt}h_{Ai,i}h_{br,i}$ of a receiver calibration loop corresponding to the present base station from received calibration signals transmitted from the mobile station transmitter of the mobile station to a plurality of base station receivers of the present base station, wherein $h_{AI,i}$ represents a channel response of the air interface, $h_{br,i}$ represents a channel response of the $i^{th}$ base station receiver, and $h_{mt}$ represents a channel response of the mobile station transmitter; and

tenth calculating means for calculating the relative reciprocity of each pair of base station transmitter and receiver of the present base station relative to the mobile station transmitter and receiver in the formula of

$$\widetilde{w}_i = \frac{h_{t,i}}{h_{r,i}}.$$

FIG. 1

FIG. 2

EP 2 498 462 A1

F I G. 3

Calculate the relative reciprocities of the two pairs of base station transmitters and receivers relative to the calibration transmitter and receiver, and calculate the relative reciprocities of the two pairs of base station transmitters and receivers relative to a reference base station transmitter and receiver by selecting one pair of base station transmitter and receiver as the reference base station transmitter and receiver    —S41

Transmit a measurement signal from the calibration transmitter of the base station 11 to the calibration receiver, and measure a channel response of the calibration transmitter and receiver    —S42

Measure a channel response of the calibration receiver    —S43

Calculate the absolute reciprocity of the calibration transmitter and receiver    —S44

Calculate a global relative calibration weight of each pair of base station transmitter and receiver of the present base station from an acquired global reference    —S45

FIG. 4

FIG.5

Calculate the relative reciprocities of the two pairs of base station transmitters and receivers relative to the mobile station transmitter and receiver — S61

Calculate global relative calibration weights of the two pairs of base station transmitters and receivers from a received global reference — S62

FIG. 6

| INTERNATIONAL SEARCH REPORT | International application No. |
|---|---|
| | PCT/CN2009/074787 |

**A. CLASSIFICATION OF SUBJECT MATTER**

See Extra Sheet

According to International Patent Classification (IPC) or to both national classification and IPC

**B. FIELDS SEARCHED**

Minimum documentation searched (classification system followed by classification symbols)

IPC: H04L, H04W, H04Q, H04B

Documentation searched other than minimum documentation to the extent that such documents are included in the fields searched

Electronic data base consulted during the international search (name of data base and, where practicable, search terms used)

WPI, EPODOC ,CNPAT ,CNKI, IEEE: antenna, calibrate, calibrating, calibration, correct, correction, reciprocity, transmit, receive, transceiver, base station, BS, mobile station, terminal, channel response

**C. DOCUMENTS CONSIDERED TO BE RELEVANT**

| Category* | Citation of document, with indication, where appropriate, of the relevant passages | Relevant to claim No. |
|---|---|---|
| A | CN1910879A (TELEFONAKTIEBOLAGET LM ERICSSON) 07 Feb. 2007(07.02.2007) description pages 4-5 | 1-15 |
| A | CN101335966A (HUAWEI TECHNOLOGIES CO., LTD.) 31 Dec. 2008(31.12.2008) the whole document | 1-15 |
| A | CN101500248A (DA TANG MOBILE COMMUNICATION EQUIP.) 05 Aug. 2009 (05.08.2009) the whole document | 1-15 |
| A | US2008/0012764A1(KANG, Jianfeng et al.) 17 Jan. 2008(17.01.2008) the whole document | 1-15 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 Jul. 2010(16.07.2010) | **19 Aug. 2010 (19.08.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>LI,Yan<br><br>Telephone No. (86-10)62413576 |

Form PCT/ISA /210 (second sheet) (July 2009)

## INTERNATIONAL SEARCH REPORT
Information on patent family members

| International application No. |
| --- |
| PCT/CN2009/074787 |

| Patent Documents referred in the Report | Publication Date | Patent Family | Publication Date |
| --- | --- | --- | --- |
| CN1910879A | 07.02.2007 | EP1551143A1 | 06.07.2005 |
| | | WO2005064871A1 | 14.07.2005 |
| | | EP1700438A1 | 13.09.2006 |
| | | DE602004005896E | 24.05.2007 |
| | | JP2007517440T | 28.06.2007 |
| | | INDELNP200604140E | 13.07.2007 |
| | | ES2285553T | 16.11.2007 |
| | | US2008125109A1 | 29.05.2008 |
| | | TW200536295A | 01.11.2005 |
| CN101335966A | 31.12.2008 | None | |
| CN101500248A | 05.08.2009 | None | |
| US2008/0012764A1 | 17.01.2008 | WO2008001192A2 | 03.01.2008 |

Form PCT/ISA /210 (patent family annex) (July 2009)

**INTERNATIONAL SEARCH REPORT**

International application No.

*PCT/CN2009/074787*

Continuation of: CLASSIFICATION OF SUBJECT MATTER

H04L25/03(2006.01)i

H04B7/04(2006.01)i

H04W24/00(2009.01)i

Form PCT/ISA /210 (extra sheet) (July 2009)